# EUROPEAN PATENT APPLICATION

(11) **EP 1 713 218 A1**
(43) Date of publication of application: **18.10.2006**
(21) Application number: 05290849.8
(22) Date of filing: 15.04.2005
(51) Int. Cl.: H04L 12/58

(54) **Communications system and method**

(71) Applicant: FRANCE TELECOM, 75015 Paris (FR)
(72) Inventor: Crawford, Ryan, Muthill, Perthshire PH5 2AG (GB); Antonini, Pierre-Antoine, 75012 Paris (FR)
(74) Representative: DeVile, Jonathan Mark

(57) **Abstract**

A communications system for communicates messages to a user via a communications network. The communications system comprises an application server, which is operable in accordance with an application program to generate a message for an intended recipient under the control of an application program. The application server is also operable to generate delivery information indicating rules for delivering the message, and to communicate the message and the delivery information to the intended recipient. The communications system also includes a presence server for monitoring the presence state of users of the communications network. A message processor is provided which is operable to intercept the message and the delivery information associated with the message. The message processor obtains from the presence server, the presence state of the intended recipient of the intercepted message, and controls the communication of the intercepted message to the intended recipient in dependence on the presence state of the intended recipient and the delivery rules indicated by the delivery information associated with the message. The provision of delivery information in outgoing messages, and the provision of a message processor for controlling the delivery of messages based on the delivery information and the presence state of an intended recipient enables the abstraction of presence logic from the application server and user plane. Greater network modularity, interoperability and scalability for presence in telecommunications networks is thereby provided.

## Description

### Field of the Invention

The present invention relates to communications systems and methods for communicating messages from an application server within a communications network to a user of the communications network.

### Background of the Invention

Presence is a term, which is used in telecommunications to convey an indication as to whether or not a user or client receiving device is currently available to receive messages. Instant messaging is one example application of presence information, in which a network of personal computers can be used to communicate messages between the users of the network. Typically an application program running on each of the personal computers is arranged to present an indication as to whether a user associated with each of the personal computers is currently "present" at their computer. That is to say, whether the user is currently using the personal computer and is therefore available to respond to a message. In other applications, a mobile communications devices may or may not be present, in that the mobile communications devices may or may not be switched-on and registered with a mobile communications network via which messages may be sent or received using the mobile communications device. Therefore presence can be applied in a user plane of a telecommunications system and for network based services, in which the presence state of a user is that user's availability to receive messages in relation to the network, for example "online" or "offline".

Certain application programs require information regarding the presence of a user so that processing decisions can be made and messages can be sent to the user. The presence state of a user may be determined by other users of a network, or by an application server within the network. Application programs held in an application server may each individually implement presence checks, thread waits, subscription and notification code. However, such an arrangement can be inefficient.

### Summary of the Invention

According to a first aspect of the invention, there is provided a communications system for communicating messages to a user of via a communications network. The communications system comprises an application server, which is operable in accordance with an application program to generate a message for an intended recipient under the control of an application program. The application server is also operable to generate delivery information indicating rules for delivering the message, and to send the message and the delivery information into the communications network for delivery to the intended recipient. The communications system also includes a presence server for monitoring the presence state of users of the communications network. A message processor is provided which is operable to intercept the message and its associated delivery information which is being communicated from the application server to an intended recipient, to obtain, from the presence server, the presence state of the intended recipient of the intercepted message, and to control the communication of the intercepted message to the intended recipient in dependence on the presence state of the intended recipient and the delivery rules indicated by the delivery information associated with the message.

The provision of delivery information in outgoing messages, and the provision of a message processor for controlling the delivery of messages based on the delivery information and the presence state of an intended recipient enables the abstraction of presence logic from the application server and user plane, facilitating greater network modularity, interoperability and scalability for presence in the network. Convenient and inexpensive usage of presence related call control may thereby become possible in application programs without the overhead of implementing code in each application program. Considering the possible number of application programs which may be resident in an operator network, the amount of this overhead may be significant.

Several disadvantages of the prior art, such as code being repeated across several application programs and incoherent software design, leading to expensive and awkward maintenance of the application programs are thereby addressed.

The potential advantages which may be provided by embodiments of the present invention may include:

### Reduction in repetition

Application servers may host many services. These services are likely to be from different suppliers or sources and may each include its own presence query logic. With this repeated functionality high maintenance and repetition may be introduced into the network. Removing the need for presence processing to be carried out by the application server may reduce this repetition.

### Scalability and performance

The application server typically has a heavy role in providing IMS services and may perform adequately for a small number of users. However, its performance will be impaired when scaled to support increased usage and an increased number of services. Performance of the application server can be improved by offloading presence processing to a more centralised network component.

### Portability

The presence logic in services is implemented for a specific presence server, for example a particular vendor. Since the presence logic is implemented for specific servers, the services themselves may not be portable across difference service infrastructures. If the services and application programs themselves do not need to know about the presence server, portability, compatibility and design freedom could be improved.

### Extensibility and future proofing

When new presence functionality is implemented within a network, simple and effective across-the-board upgrades to services can be provided simply by the inclusion of additional delivery information. No additional logic or service rewriting will be necessary.

### Simplification

Providing delivery information to interact with presence states could expedite the development of services in the application server and reduce repetition and complex service implementations.

Preferably, according to an embodiment of the invention, the message processor comprises a message filter and a message store. The message filter is operable to intercept the message sent from the application server to the intended recipient, to obtain, from the presence server, the presence state of the intended recipient of the intercepted message, and to selectively communicate the intercepted message to the intended recipient or the message store in dependence on one or both of the presence state of the intended recipient and the delivery rules indicated by the delivery information associated with the message. The message store is operable to receive and store a message communicated to the message store from the message filter, to obtain, from the presence server, the presence state of the intended recipient of the message stored to the message store, and to selectively communicate the stored message to the intended recipient of the stored message in dependence on one or both of the presence state of the intended recipient of the stored message and the delivery rules indicated by the delivery information associated with the message.

The use of a message filter and a message store to perform the operations provided by the message processor enables the functionality required of the message processor to be provided in two discrete functional entities. In this implementation, the message filter may be provided as an agent within the application server, or may alternatively be provided externally of the application server.

The messages may be Session Initiation Protocol (SIP) messages and the delivery information may comprise one or more tags specified in a header of the SIP messages. The delivery tags may specify a number of different delivery modes. For instance, the delivery tags may specify that if the presence state of the intended recipient indicates the intended recipient to be unavailable, the message should be forwarded to the message store.

The delivery tags may include an identification of a thread to which the message belongs. The message store may then be arranged to determine the time at which each message was sent, and when the intended recipient becomes available, to forward stored messages within the same thread to the intended recipient in a time order. Alternatively, when the intended recipient becomes available, the message store may forward only the most recently sent message within the thread.

The delivery tags may specify a time offset, and the message store, on receipt of the message will wait a time indicated by the time offset before attempting to communicate the message to the intended recipient.

The delivery tags may also be set to control the message store to generate a consolidated message containing data from a plurality of stored messages, and to forward the consolidated message to the intended recipient when the intended recipient becomes available.

Rather than storing the message until the intended recipient becomes available, the delivery tags may specify an alternative destination to which the message should be forwarded if the presence state of the intended recipient indicates the intended recipient to be unavailable.

Various aspects and features of the present invention are defined in the appended claims, which include a communications system, a communications method, a message processor, a message filter and a message store.

### Brief Description of the Drawings

Example embodiments of the present invention will now be described with reference to the accompanying drawings, where like parts are provided with corresponding reference numerals and in which:
Figure 1 is a schematic diagram of a communications system for communicating messages according to an embodiment of the invention;
Figure 2 is a schematic flow diagram of a method of communicating messages according to an embodiment of the invention;
Figure 3 schematically illustrates a SIP based presence subscription procedure according to an embodiment of the invention;
Figure 4 schematically illustrates a SIP based message handling procedure for an unavailable intended recipient according to an embodiment of the invention;
Figure 5 schematically illustrates a SIP based presence update procedure according to an embodiment of the invention;
Figure 6 schematically illustrates a SIP based message handling procedure when an intended recipient becomes available according to an embodiment of the invention;
Figure 7 schematically illustrates a SIP based "message delivered" procedure according to an embodiment of the invention;
Figure 8 schematically illustrates an example implementation in which an Internet Protocol Multimedia Subsystem (IMS) forms part of the network architecture; and
Figure 9 schematically illustrates an example SIP message header according to an embodiment of the invention.

### Description of the Example Embodiments

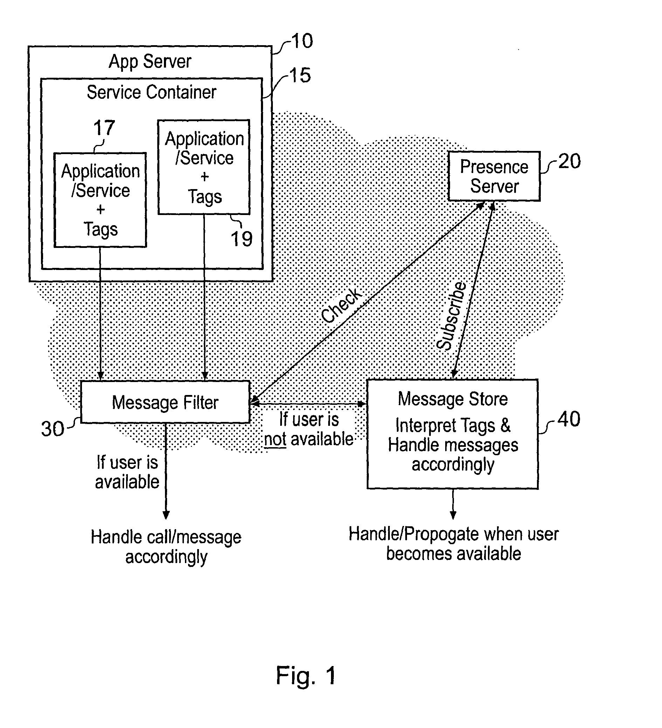

Figure 1 schematically illustrates a communications system for communicating messages across a network. The communications system comprises an application server 10 for providing application programs. An application program can provide specified services to users of the network. The applications server 10 comprises a service container 15 containing an application program 17 and an application program 19. The application programs 17, 19 are operable, either under control of a third party or of their own accord, to communicate messages to a user of the network. The application programs are also able to generate delivery information, in the present example delivery tags, in association with messages, the delivery tags indicating delivery rules for delivering the messages to an intended recipient.

The communications system also comprises a presence server 20. The presence server 20 holds information regarding the presence status of users of the network. Network entities may obtain the presence status of one or more users of the network either by sending a query message to the presence server, or by subscribing to the presence server. The presence status of a user may simply be "online", indicating that the user is available to receive messages and/or calls, or "offline", indicating that the user is not available to receive messages and/or calls. Additional presence states may be provided, such as "important messages only", indicating that only messages classified as important are to be routed to the user, or "from specified sender(s) only", indicating that only messages from predetermined sender(s) are to be routed to the user.

The communications system also comprises a message filter 30. The message filter 30 is arranged to intercept messages sent from the application server 10 to a user of the network. The message filter 30 may be an agent within the application server 10 or alternatively a separate entity in the network. The message filter 30 is operable to check the presence status of an intended recipient of the message if required, and to filter messages requiring further processing to a message store 40. For example, if a user is online then further processing may not be required for that message, and so it may be forwarded directly. However, if the intended recipient is offline, then the message may be processed according to the delivery tags set in association with the message. The message filter 30 may forward the message to the message store 40 for this processing to take place.

The message store 40 is operable to interpret the delivery tags and to carry out message processing in accordance with those tags. For example, the message store could subscribe to the presence state of the intended recipient at the presence server 20, store the message, and then, when it receives notification that the intended recipient has become available, retrieve the message and forward to the intended recipient.

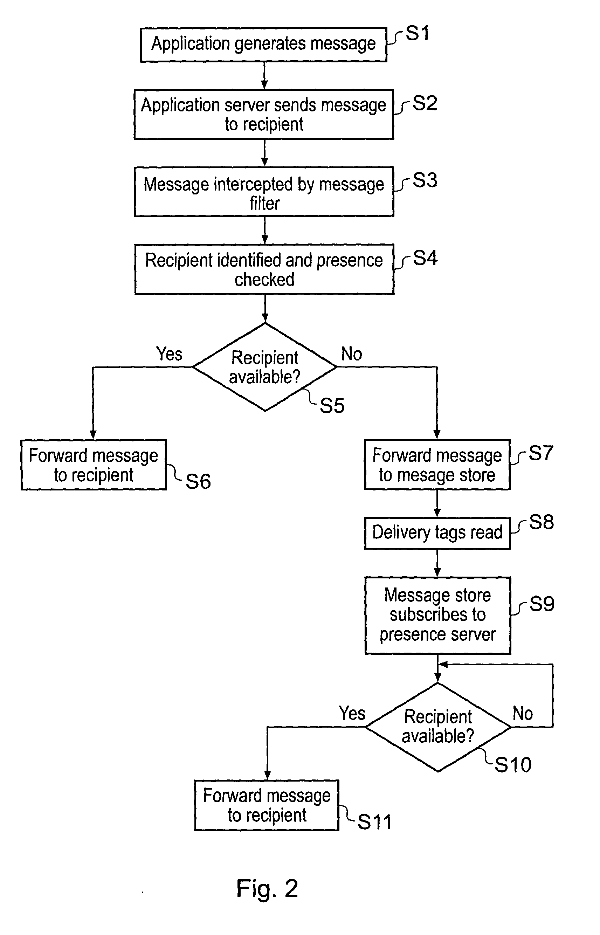

Figure 2 schematically illustrates an example method of communicating messages according using the above apparatus. In particular Figure 2 relates to a situation where an application program/content provider wishes to send content in a message to a user. First, at a step S1, an application program within the application server 10 generates a message to be communicated to an intended recipient within the network. In addition to the message itself, delivery tags are also generated to indicate how the network should process this message depending on the users presence state.

The application server 10, at a step S2, sends the message to the intended recipient. The message is then intercepted, at a step S3, by the message filter 30. At a step S4, the identity of the intended recipient is determined, and the message store 30 refers to the presence server 20 to determine the presence state of the intended recipient. Any suitable checking mechanism may be used, for instance by directly accessing the presence server 20 database. If, at a step S5, the intended recipient has a presence status specifying them to be available to receive messages, the message is forwarded to the intended recipient at a step S6. Alternatively, if at the step S5 the intended recipient has a presence status specifying them not to be available to receive messages, the message is forwarded at a step S7 to the message store 40.

When the message is received at the message store, it is stored and its delivery tags are read at a step S8. Also, at a step S9, the message store 40 subscribes to the presence server 20 for the presence state of the intended recipient of the message. That is to say, the message store 40 registers with the presence server that it wishes to received an indication that the user to which the message is to be sent is available to receive that message. The message remains at the message store until, at a step S10, the intended recipient becomes available, as indicated by a message from the presence server 20 to the message store 40. When the intended recipient has become available at the step S10, the message is forwarded, in accordance with the delivery rules set by the delivery tags, at a step S11 to the intended recipient.

The delivery tags described above specify the conditions under which the message is to be delivered, and could take many different forms, and specify many different types of delivery behaviour by the message filter and message store. Table 1 illustrates a selection of example tags. In Table 1, the "Tag ID" is a unique identifier of the tag, the "thread" indicates a contextual group of messages to which the message belongs, "offset" specifies a time delay and "dest" specifies a target address other than the address of the intended recipient.

**Table 1: Delivery Tags**

| **Tag Name** | **Tag ID** | **Thread** | **Offset** | **Dest** | **Description** |
|---|---|---|---|---|---|
| None | N/a | N/a | N/a | N/a | Presence processing not required |
| Default | 0 | N/a | N/a | N/a | If intended recipient available - forward to intended recipient, if intended recipient not available, store until available |
| Wait for time, t | 1 | N/a | +time | N/a | Store message and wait time t, after time t, forward to intended recipient when available |
| All messages ordered | 2 | Required | +time (opt.) | N/a | If offset empty, forward to intended recipient if available, or to store if not available; If offset specified, store until expiry of time t then, when intended recipient available, forward all messages in thread in time order |
| Only most up-to-date | 3 | Required | +time (opt.) | N/a | As for "all messages ordered" except that only most recent message forwarded when user becomes available |
| Consolidate | 4 | Optional | +time (opt.) | N/a | As for "all messages ordered" except only a single consolidated message forwarded when user becomes available |
| Alternative Route | 5 | N/a | N/a | Req. | If intended recipient available, forward to intended recipient, if intended recipient unavailable, forward to alternative destination |

### Message Delivery Tags

In more detail, the "not populated" tag from Table 1 specifies that the network should attempt to deliver the message without regard to presence, and in particular without performing presence checks in respect of the intended recipient. In this case, if the user is unavailable to receive the message, the message may be discarded.

The "default" tag relates to the simple case where the message filter refers to the presence server to check the availability of the intended recipient, and if the intended recipient is available, forwards the message on to the intended recipient. If the intended recipient is determined not to be available, the message is forwarded to the message store. In this case, the message store subscribes to the presence state of the intended recipient at the presence server and stores the message. When the presence server informs the message store that the intended recipient has become available, the message store forwards the message to the intended recipient.

The "wait for time, t" tag requires a time offset, t to be specified. When the message filter receives a message having this tag associated with it, the message filter does not check the intended recipients presence but simply forwards the message directly to the message store. On receipt of the message, the message store stores the message and waits for the expiry of the time offset specified. Once this time has expired, the message store subscribes to the presence state of the intended recipient, and, when that intended recipient becomes available forwards the message to the intended recipient.

The "all messages ordered" tag requires a thread to be specified, and may optionally include a time offset. A thread is an indication of a group to which a message belongs. The group specified by the thread could constitute all messages from a given origin, all message relating to the same subject matter, or any other grouping. When the message filter receives a message having this tag associated with it, it will operate differently depending on whether a time offset is specified. If a time offset is not specified, then the message filter will check the intended recipients availability, and if the intended recipient is available, will forward the message to the intended recipient. If the intended recipient is unavailable, the message store will forward the message to the message store. If however a time offset is specified, the message store will not check the presence state of the intended recipient and will automatically forward the message to the message store. The message store will store all the received message in a particular thread, will wait until the expiry of the offset time, and will then subscribe to the presence state of the intended recipient, and when the intended recipient becomes available will forward all stored messages in the thread to the intended recipient. The message may include a time stamp which provides an indication of when the message was sent. In this case, using the time stamp, the messages can be supplied to the intended recipient in a time order. Where the message includes an expired message header (e.g. a SIP Expires header), messages which have expired will not be forwarded. An example for this delivery mode could be a series of news update messages for a football match, where it is desirable for the messages to received by the intended recipient in the order in which they were sent. Otherwise a user which has subscribed to the receive the updates, may receive a message indicating the half time score after receiving a message indicating the full-time score which is clearly redundant.

The "only most up to date" tag requires a thread, and may optionally includes an offset time. When the message filter receives a message having this tag associated with it, it will operate differently depending on whether a time offset is specified. If a time offset is not specified, then the message filter will check the intended recipients availability, and if the intended recipient is available, will forward the message to the intended recipient. If the intended recipient is unavailable, the message store will forward the message to the message store. If however a time offset is specified, the message store will not check the presence state of the intended recipient and will automatically forward the message to the message store. The message store receives all messages having the same thread, and as it receives each message overwrites the previous message with the new message, thus keeping only the most up to date message in the thread. If a time offset is specified, the message store will wait for the expiry of the offset time before continuing, and will then subscribe to the presence state of the intended recipient, and will forward the message when the intended recipient becomes available.

The "consolidate everything" tag requires an offset time and may optionally specify a thread. The message filter, when receiving a message having this tag associated with it, will if no offset time is specified refer to the presence server to check the availability of the intended recipient, and if the intended recipient is available, forward the message on to the intended recipient. If the intended recipient is determined not to be available, the message will be forwarded to the message store. If an offset is specified, the message filter will not check the presence of the intended recipient but will instead simply forward the message to the message store. At the message store, if the thread is populated then the message store will store all the messages indexed by the thread. Otherwise, if the thread is not populated the message store will simply store all messages for the intended recipient. If an offset were specified in the tag, the message store will wait for the expiry of the offset, and will then subscribe to the intended recipients presence state. If no offset is specified, the message store will proceed directly to subscribe to the intended recipients presence state. Once the intended recipient becomes available, the message store will forward a single consolidated message containing everything received by the message store while the intended recipient was unavailable. The message may be either a single message consolidating all the messages received as part of a thread (if a thread was specified), or alternatively a single message consolidating all separate and distinct messages sent to the intended recipient.

Finally, the "alternative route" tag, which requires a target address "dest" to be specified, causes the message filter to determine the presence state of the intended recipient, and if the intended recipient is available to forward the message to the intended recipient, and if the intended recipient is unavailable to forward the message to an alternative target address specified by the "dest" field.

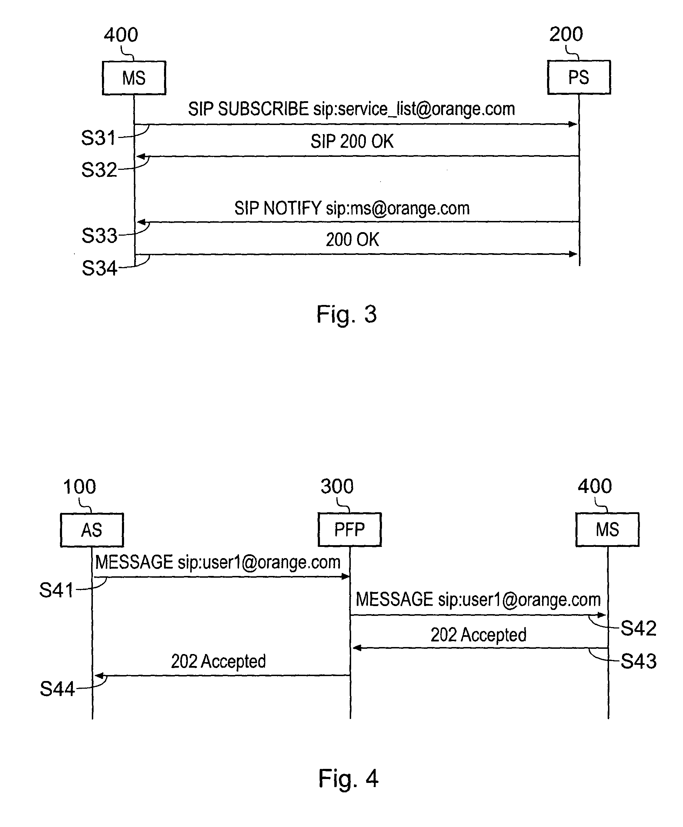

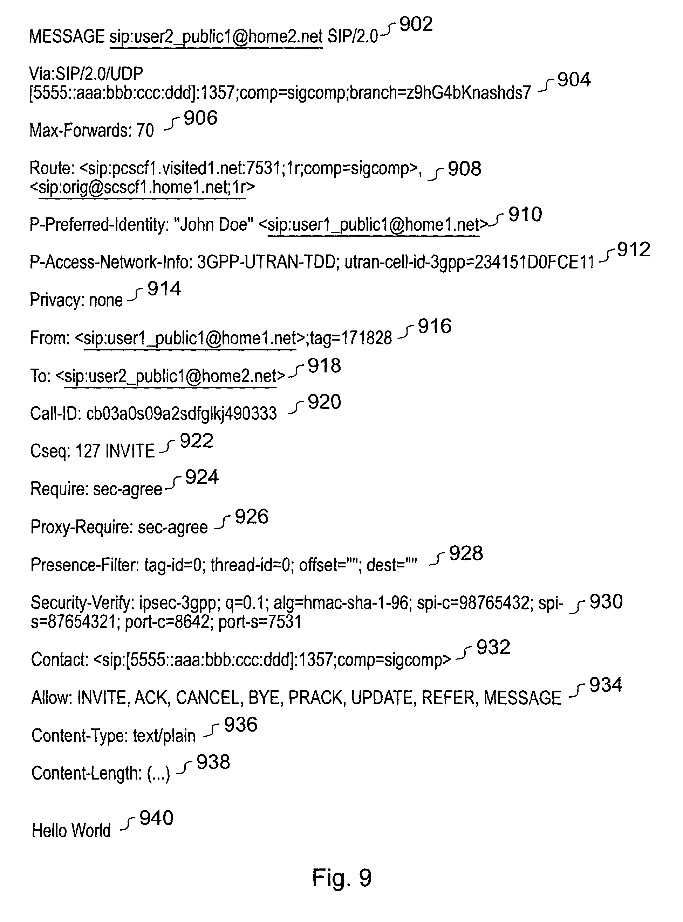

In one example implementation, the messages sent over the network are Session Initiation Protocol (SIP) messages. An example operation using a SIP based messaging system will now be described with reference to Figures 3 to 7. In this example, the message store is referred to as a presence filter proxy. The delivery tags may be provided within a SIP message header. The delivery tags may be provided within a SIP message header, for instance as exemplified later with reference to Figure 9.

The message filter, which in this example is the presence proxy filter (PFP), on receipt of a message from the application server, checks the presence of the intended recipient of the message. This operation can be carried out directly through a dedicated interface that will allow the PFP to directly access the presence database of the presence server. Alternatively, the PFP could send a SIP message to the presence server that will return presence information in a return SIP message.

Referring to Figure 3, a message store 400 may subscribe to the presence status of one or more subscribers to a service. In the present example, the message store 400 subscribes to the presence status of every subscriber of the service. Specifically, the message store 400 sends, at a step S31, a SIP SUBSCRIBE message to the presence server 200 in relation to all users specified by a service list. In response to the SUBSCRIBE message, the presence server 200, at a step S32, communicates a SIP OK acknowledgement message back to the message store 400. By subscribing in this way, the message store 400 is always aware of the presence status of the different subscribers of the service provided by the application server. In an alternative example, knowledge of the presence of a service subscriber by the message store can be obtained in other ways such as by subscribing each time it has to check the presence status of a user, and then unsubscribing when the message has been delivered to the user. However, in the present example, by subscribing in respect of all service subscribers, the message store has a global knowledge of the presence status of every service subscriber. When the presence state of a service subscriber within the service list changes, the presence server 200 will communicate, at a step S33, a SIP NOTIFY message to the message store 400 to inform the message store 400 of the new presence state.

Referring now to Figure 4, an application server 100 sends a SIP message to a subscriber, and as that subscriber is unavailable, the message will be stored into the message store 400. Specifically, the application server 100 will adapt the message header to specify that the message should be routed to a presence filter proxy (PFP) 300. The application server 100 will, at a step S41, sends the SIP message MESSAGE to a subscriber via the PFP 300. As the PFP 300 has access to presence information in relation to every user of the application server 100, it will be able to determine whether or not the user is available to receive the message. In this case the PFP 300 knows that the user is unavailable, and so forwards the message to the message store 400 at a step S42.

The message store 400 will implicitly know that the intended recipient is unavailable, because the message would not have been communicated to the message store if the intended recipient had been available, and so it stores the message for later transmission. The message store 400 will communicate a 202 Accepted message back to the PFP 300 at a step S43, thereby notifying that the message has been stored and that it will be processed later. Subsequently, at a step S44, the 202 Accepted message will be relayed back to the application server 100 to notify the application server 100 that the message could not be delivered by that it has been stored in the network for later delivery.

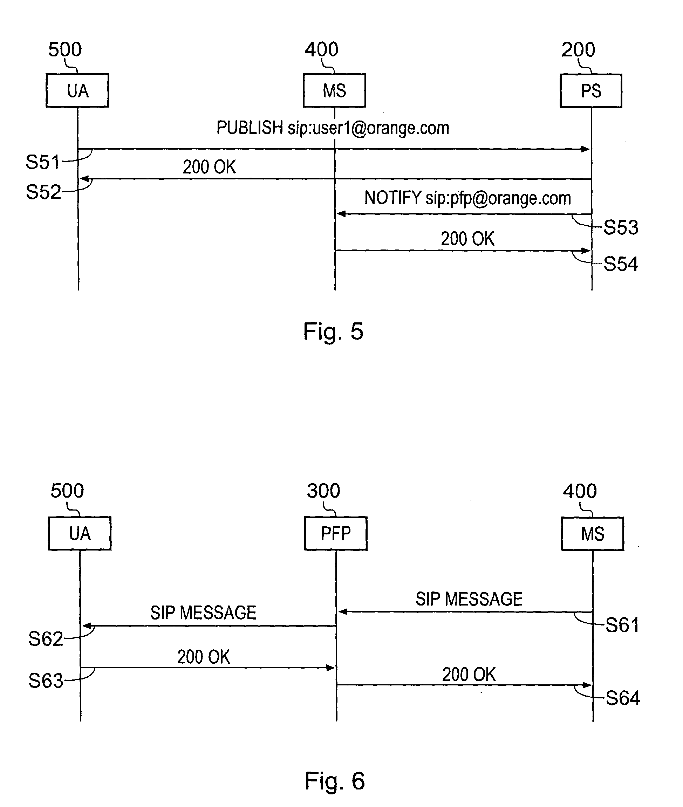

Referring to Figure 5, the state of the intended recipient becomes available, the presence server data are updated and notified to the message store. Specifically, at a step S51 a user agent 500, in this case user1 publishes its new presence status to the presence server 200 using a SIP PUBLISH message. At a step S52 the presence server 200 acknowledges receipt of the PUBLISH message by communicating an OK message back to the user agent 500. The presence server 200 then updates the presence state for user1 in its database and, at a step S53 sends a NOTIFY message to the message store 400 to inform the message store that user1 is now available to receive messages. The message store 400 acknowledges receipt of the NOTIFY message by communicating an OK message to the presence server 200 at a step S54.

Referring to Figure 6, when the presence state of the intended recipient, in this case user1 whose presence state was updated in Figure 5, specifies the intended recipient to be able to receive message, the message store 400 sends the stored message to the intended recipient. Specifically, at a step S62, the message is sent from the message store to the PFP 300 as a SIP message, and the message is then forwarded at a step S62 from the PFP 300 to the user agent 500. It will be appreciated that the message could alternatively be forwarded directly from the message store 400 to the user agent 500, but by sending the message via the PFP 300, if the intended recipient became unavailable before the message was delivered, the PFP 300 could route it back to the message store 400. On receipt of the message, the user agent acknowledges receipt by sending, at a step S63, an OK message back to the PFP 300, which is then relayed to the message store 400 at a step S64.

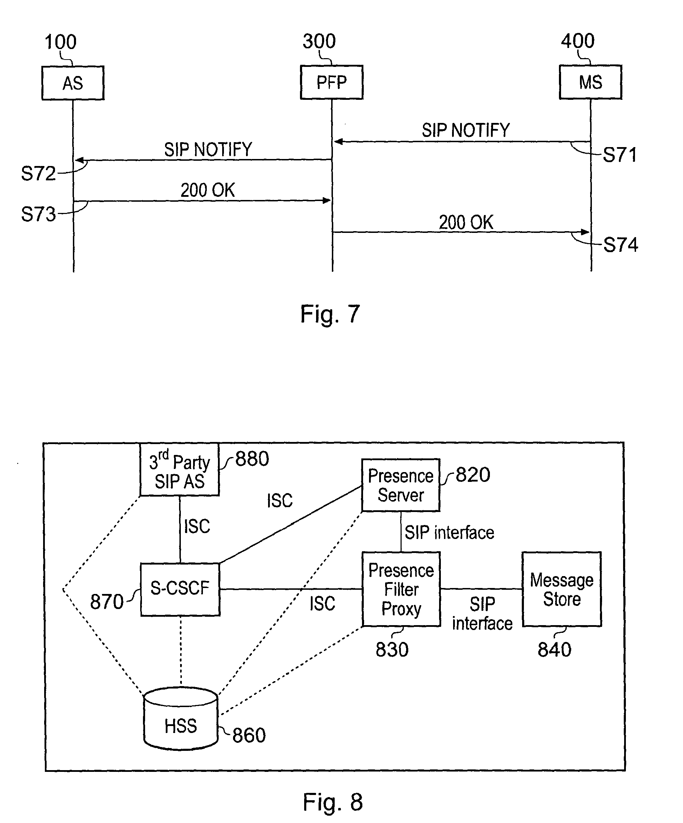

Referring to Figure 7, it is desirable to notify the originating application server 100 that the message has been delivered. Accordingly, the message store, upon receiving the acknowledgement message at step S64 of Figure 6, sends, at a step S71 a SIP NOTIFY message to the PFP 300 which is then forwarded at a step S72 to the originating application server 100. This NOTIFY message informs the application server 100 that the message has been successfully delivered to user1. Within SIP, to be able to process this NOTIFY message, the application server 100 will have to be implicitly or explicitly subscribed to this event at the message store 400. The simplest way of achieving this is to define that when the application server 100 received the 202 Accepted message at the step S44 of Figure 4, it subscribed implicitly to the Event "Message delivered".

Referring to Figure 8, an example network architecture is described. The example architecture relates to a 3G network, and in particular relates to an Internet Protocol Multimedia Subsystem (IMS) network. The network comprises a Serving Call Session Control Function (S-CSCF) 870 which is an IMS element providing session control for mobile users, and which enables the network operator to support the services. The S-CSCF 870 provides functions such as mobile registration management, session maintenance, interaction with other services, charging and security. The network also includes a Home Subscriber Server (HSS) 860 which provides home database functions including the HLR (Home Location Register), DNS (Domain Name Servers) and security and network access databases. The network also includes a third party SIP based application server 880. A presence server 820 is provided and interacts with the S-CSCF 870 and the HSS 860 via an ISC (IMS Service Control) interface. Similarly, a presence filter proxy 830 is provided and interacts with the S-CSCF 870 and the HSS 860 via an ISC (IMS Service Control) interface. The presence server 820 and the presence filter proxy 830 interact with each other over a SIP interface. A message store 840 is provided and interacts with the presence filter proxy 830 over a SIP interface.

In this architecture, the third party SIP application server 880 does not have a direct access to the presence filter proxy 830 for security purposes. When the SIP application server 880 sends a message towards a user, if the user is not registered, the S-CSCF 870 will still trigger the message, and if the S-CSCF 870 does not have the relevant user profile it will download it from the HSS 860. To enable the functionality of the presence filter proxy and the message store, a new header is provided. Offset information used in the delivery tags could be achieved using either a new header element or alternatively by using standard header "Expires" or "Timestamp" elements. If the offset field is provided in this way, the new header will need to specify the tag to be used, a thread (where applicable) and an alternative destination (where applicable).

Referring to Figure 9, an example SIP message header comprising delivery tags is illustrated. The message header comprises a message method 902 line which specifies the type of message and the intended recipient of the message. The message also comprises routing information including a Via line 904, which defines the routing path taken by the message so far, a Max-Forwards line 906, which specifies the maximum number of routing hops which can be taken without the message terminating and a Route line 908, which specifies the next hop in the route to the intended recipient. The identity of the user sending the message is specified by the P-Preferred-Identity line 910, and in information about the access network is specified by the P-Access-Network-Info line 912.

The message may request a certain degree of privacy for the message using the Privacy line 914, although in this case privacy is not requested. The originator of the message is indicated by the From line 916, and the intended recipient of the message is indicated by the To line 918. The message is uniquely identified by a Call-ID 920 and a Command Sequence line 922. A Require line 924 and a Proxy-Require line 926 set out options which must be supported to process the message.

The Presence-Filter line 928 is where the delivery tags are specified. In particular, a tag-id which is a unique identifier of the tag, a thread-id which indicates a message thread to which the message belongs, a time offset and an alternative destination dest. Not all of these tags are populated in this case. In particular the thread-id tag is set to zero and the offset and dest tags are unpopulated.

Security information is set in the Security-Verify line 930, a Contact line 932 is provides having a function which depends on the type of message it is used and which may contain a display name, a Universal Resource Indicator (URI) with URI parameters, and header parameters. An Allow line 934 is used to specify methods supported by the originator of the message. Information regarding the content of the message includes a type of message content, in this case plain text 936 and length of message content 938. An example message body 940 is also provided.

Various modifications may be made to the embodiments herein before described without departing from the scope of the present invention.

## Claims

1. A communications system for communicating messages to a user via a communications network, the system comprising:
an application server operable in accordance with an application program
to generate a message for an intended recipient under the control of the application program;
to generate delivery information for delivering the message, the delivery information indicating rules for delivering the message; and
to send the message and the delivery information into the communications network for delivery to the intended recipient;
a presence server for monitoring the presence state of users of the communications network; and
a message processor, operable
to intercept the message and the delivery information associated with the message sent from the application server;
to obtain, from the presence server, the presence state of the intended recipient of the intercepted message; and
to control the communication of the intercepted message to the intended recipient in dependence on the presence state of the intended recipient and the delivery rules indicated by the delivery information associated with the message.

2. A communications system according to claim 1, wherein the message processor comprises
a message filter; and
a message store; wherein the message filter is operable
to intercept the message and its associated delivery information which is being communicated to the intended recipient from the application server;
to obtain, from the presence server, the presence state of the intended recipient of the intercepted message; and
to selectively communicate the intercepted message to the intended recipient or the message store in dependence on one or both of the presence state of the intended recipient and the delivery rules indicated by the delivery information associated with the message;
the message store being operable
to receive and store a message communicated to the message store from the message filter;
to obtain, from the presence server, the presence state of the intended recipient of the message stored to the message store; and
to selectively communicate the stored message to the intended recipient of the stored message in dependence on one or both of the presence state of the intended recipient of the stored message and the delivery rules indicated by the delivery information associated with the message.

3. A communications system according to claim 2, wherein the presence state of an intended recipient indicates the intended recipient to be available to receive a message, or unavailable to receive a message.

4. A communications system according to any preceding claim, wherein the message is a Session Initiation Protocol message and the delivery information comprises one or more tags provided within a header of the Session Initiation Protocol message.

5. A message processor for controlling the communication of messages from an application server within a communications network to a user of the communications network; the message processor being operable
to intercept a message being communicated to an intended recipient from an application server within the communications network, the message having associated therewith delivery information indicating rules for delivering for the message;
to obtain, from a presence server monitoring the presence state of users of the communications network, the presence state of the intended recipient of the intercepted message; and
to control the communication of the intercepted message to the intended recipient in dependence on the presence state of the intended recipient and the delivery rules indicated by the delivery information associated with the message.

6. A message processor according to claim 5, comprising
a message filter; and
a message store; wherein the message filter is operable
to intercept the message and its associated delivery information which is being communicated to the intended recipient from the application server
to obtain, from the presence server, the presence state of the intended recipient of the intercepted message; and
to selectively communicate the intercepted message to the intended recipient or the message store in dependence on one or both of the presence state of the intended recipient and the delivery rules indicated by the delivery information associated with the message;
the message store being operable
to receive and store a message communicated to the message store from the message filter;
to obtain, from the presence server, the presence state of the intended recipient of the message stored to the message store; and
to selectively communicate the stored message to the intended recipient of the stored message in dependence on one or both of the presence state of the intended recipient of the stored message and the delivery rules indicated by the delivery information associated with the message.

7. A message filter for controlling the communication of messages from an application server within a communications network to a user of the communications network, the message filter being operable
to intercept a message being communicated to an intended recipient from an application server within the communications network, the message having associated therewith delivery information indicating rules for delivering for the message;
to obtain, from a presence server monitoring the presence state of users of the communications network, the presence state of the intended recipient of the intercepted message; and
to selectively communicate the intercepted message to the intended recipient or a message store in dependence on one or both of the presence state of the intended recipient and the delivery rules indicated by the delivery information associated with the message.

8. A message store for receiving messages and associated delivery information indicating rules for delivering for the message intercepted by a message filter and communicated to the message store, the message store being operable
to receive and store the message communicated to the message store from the message filter;
to obtain, from a presence server monitoring the presence state of users of the communications network, the presence state of the intended recipient of the intercepted message; and
to selectively communicate the stored message to the intended recipient of the stored message in dependence on one or both of the presence state of the intended recipient of the stored message and the delivery rules indicated by the delivery information associated with the message.

9. A communications method for communicating messages from an application server within a communications network to a user of the communications network, the method comprising the steps of:
generating at the application server, a message for an intended recipient under the control of an application program;
generating delivery information for delivering the message, the delivery information indicating rules for delivering the message;
sending the message and the delivery information into the communications network for delivery to the intended recipient;
intercepting the message and the delivery information associated with the message sent from the application server;
obtaining, from a presence server monitoring the presence state of users of the communications network, the presence state of the intended recipient of the intercepted message; and
controlling the communication of the intercepted message to the intended recipient in dependence on the presence state of the intended recipient and the delivery rules indicated by the delivery information associated with the message.

10. A communications method according to claim 9,
intercepting, at a message filter, the message being communicated from the application server to the intended recipient;
obtaining, from the presence server, the presence state of the intended recipient of the intercepted message;
selectively communicating, from the message filter, the intercepted message to the intended recipient or to a message store in dependence on one or both of the presence state of the intended recipient and the delivery rules indicated by the delivery information associated with the message;
receiving at the message store and storing, a message communicated to the message store from the message filter;
selectively communicating the stored message to the intended recipient of the stored message in dependence on one or both of the presence state of the intended recipient of the stored message and the delivery rules indicated by the delivery information associated with the message.

11. A computer program providing computer executable instructions, which when loaded on to a data processor causes the data processor to perform the method according to Claim 9 or Claim 10.

12. A medium bearing information representing the computer program as claimed in Claim 9.
